# EUROPEAN PATENT APPLICATION

(11) **EP 1 619 610 A1**
(43) Date of publication of application: **25.01.2006**
(21) Application number: 03717680.7
(22) Date of filing: 22.04.2003
(51) Int. Cl.: G06Q 10/00

(54) **SOLAR CELL ORDERING SYSTEM**

(71) Applicant: SHARP KABUSHIKI KAISHA, Osaka 545-8522 (JP)
(72) Inventor: KUBO, Takahiro, c/o SHARP KABUSHIKI KAISHA, Tenri-shi, Nara 632-8567 (JP)
(74) Representative: Müller - Hoffmann & Partner
(86) International application number: PCT/JP2003/005076
(87) International publication number: WO 2004/095328

(57) **Abstract**

An object of the invention is to provide a solar cell ordering system for planning a photovoltaic power system, making a cost estimate thereof, and placing an order thereof. A solar cell ordering system (50) includes roof shape creating means (1) for creating roof shape data (32) based on inputted roof information (31), module layout means (2) for designing a layout of a solar cell module using the roof shape data (32), and drawing up a list (34) of members of necessity for the photovoltaic power system, estimate creating means (3) for drawing up estimate information (37) using the list (34) of members and unit price information (36), and order information processing means (4) for placing an order for the members using the estimate information (37) and order application information (38).

## Description

### Technical Field

The invention relates to a solar cell ordering system for installation planning of a photovoltaic power system, and estimating and ordering necessity members there.

### Background Art

There is a web sites in which, for people who are interested in a photovoltaic power system and who are considering for purchase of the photovoltaic power system, case examples of installation are introduced, and power generation after installation is predicted, and installable photovoltaic power systems are introduced based on a family structure, a lifestyle, a roof shape and the like. This web site enables simple pre-consideration concerning purchasing the photovoltaic power system. Moreover, this web site can provide such information at any time by internet.

The purchase of the photovoltaic power system is generally carried out as follows. First of all, a person considering of purchase makes contact with an agency dealing in the photovoltaic power system so as to have a meeting with a sales rep in the agency. At this time, the person considering of purchase has a preliminary discussion with the sales rep regarding a scale of to-be-installed photovoltaic power system (total output of electricity of the photovoltaic power system), total price for the installation, an installation data, and the like. After the meeting, the sales rep provides a planning about a method for installation and a method for connection of the photovoltaic power system based on demands of the person considering of purchase. And then, the sales rep draws up an estimate based on the planning. Subsequently, the sales rep has a meeting again with the person considering purchase using the estimate. The person considering purchase will go through a procedure of purchasing the photovoltaic power system if this estimate is agreeable.

At the same time, there is a system for advertisement, order entry, and sales of articles other than the photovoltaic power system, using internet as a sales system of the articles. In the sales system, explanations of the articles are given on a web site. In the sales system, in a case where a person who looked at the explanations of the articles on the web site and desires to purchase the articles, the person can place an order of the article on the web site.

However, there is no sales system for selling the photovoltaic power system by use of internet. This is because members of necessity for the photovoltaic power system differ depending on roofs, and works before order placement become complicated. It is therefore necessary in a case of the photovoltaic power system that a person considering of purchase and a sales rep have a meeting at the time of purchase, though information is provided by the internet.

Since the photovoltaic power system is a pricey article, the meeting is often held when a head of household has the time. Therefore, in a case where the meeting cannot be fixed, it takes a long term until next meeting. In addition, when modification is necessary, the number of the meetings will increase for it. Accordingly, it takes a long time for the person considering of purchase to finally purchase the photovoltaic power system. Furthermore, it takes a lot of troubles for works such as planning and estimation of the photovoltaic power system.

### Disclosure of Invention

An object of the invention is to provide a solar cell ordering system permitting planning, estimation, and order placement of a photovoltaic power system.

The invention is a solar cell ordering system for planning a photovoltaic power system, making a cost estimate thereof, and placing an order thereof, the solar cell ordering system comprising:
roof shape creating means for creating roof shape data based on inputted roof information;
module layout means for designing a layout of a solar cell module using the roof shape data, and drawing up a list of members of necessity for the photovoltaic power system;
estimate creating means for drawing up estimate information using the list of members and unit price information showing a unit price of each member; and
order information processing means for placing an order for the members using the estimate information and order application information including information regarding a customer, which is necessary for application of the order placement.

According to the invention, the solar cell ordering system comprises the roof shape creating means, the module layout means, and the estimate creating means. The solar cell ordering system creates roof shape data based on roof information by the roof shape creating means, and designs a layout of a solar cell module using the roof shape data by the module layout means, and draws up a list of members, and further by the estimate creating means, draws up estimate information based on the list of members. This makes it possible to appropriately design the layout of the solar cell module according to the roof, and to draw up the estimate in accordance with the layout. Moreover, the solar cell ordering system has the order information processing means, and by the order information processing means, places an order for the members based on the estimate information. This makes it possible to place an order for the members of necessity for the photovoltaic power system using the estimate information drawn up by the estimate creating means. It is thus possible to design the layout of the solar cell module according to the roof, and to place an order for the members of necessity for the photovoltaic power system.

Further, the invention is characterized in that the roof information includes information showing a shape of a roof, which is depicted by a profile line of the roof when the roof is seen from a top, and includes at least one piece of information among information showing a variety of roof materials, information showing a type of the roof, and information showing a relation between shape and direction of the roof.

According to the invention, since the roof information includes the information showing a shape of a roof, which is depicted by a profile line of the roof when the roof is seen from a top, the roof shape creating means can create a roof construction plan which is a view of the roof seen from the top, as one of the roof shape data. Moreover, since the roof information includes at least one piece of the information among information showing a variety of roof materials, information showing a type of the roof, and information showing a relation between shape and direction of the roof, the module layout means can draw up a more appropriate list of members according to the roof, and the estimate creating means can draw up a more correct estimate.

Further, the invention is characterized in that the list of members includes at least name and quantity of each of the members.

According to the invention, since the list of members includes at least the name and quantity of each of the members, the estimate creating means easily draws up the estimate information using the list of members.

Further, the invention is characterized in that the unit price information includes at least name and a unit price of each of the members.

According to the invention, since the unit price information includes at least the name and the unit price of each of the members, the estimate creating means can easily obtain the unit price of each of the members of necessity for drawing up the estimate information.

Further, the invention is characterized in that the estimate information includes at least a name of each of the members, a quantity of each of the members, a unit price of each of the members, and a total price of all the members.

According to the invention, since the estimate information includes at least the name of each of the members, the quantity of each of the members, the unit price of each of the members, and the total price of all the members, it is possible to provide sufficient information as an estimate.

Further, the invention is characterized in that the order application information includes at least one of a name of a customer, an address of the customer, an address of an installation site, a payment method, and a desired installation date.

According to the invention, since the order application information includes at least one of the name of the customer, the address of the customer, the address of the installation site, the payment method, and the desired installation date, the order information processing means can obtain information regarding the customer, which is necessary for the application of the order placement.

Further, the invention is characterized in that the order information processing means draws up order contract information to be sent to a customer, order information for giving an instruction of procurement of the members, shipping instruction information for giving an instruction of shipping of the procured members, and installation completion confirming information having a content written thereon that the photovoltaic power system has completely installed.

According to the invention, the order information processing means draws up the order contract information to be sent to the customer, the order information for giving the instruction of procurement of the members, the shipping instruction information for giving the instruction of shipping of the procured members, and the installation completion confirming information having the content written thereon that the photovoltaic power system has completely installed. Since the order information processing means thus carries out information processing which is required from the application of the order placement up to the confirmation of completion of the installation, it is possible to save troubles.

Further, the invention is characterized in that the order contract information includes at least a name of a customer, an address of the customer, an order accepted date, and an installation date.

According to the invention, since the order contract information includes at least the name of a customer, the address of the customer, the order accepted date, and the installation date, it is possible to provide information of necessity at the time when the customer approves the order contract.

Further, the invention is characterized in that the shipping instruction information includes at least a name of a customer, an address of the customer, an address of an installation site, a name of each of the members, a quantity of each of the members, a name of a constructor, a contact address of the constructor, and a scheduled installation date.

According to the invention, since the shipping instruction information includes at least the name of the customer, the address of the customer, the address of the installation site, the name of each of the members, the quantity of each of the members, the name of the constructor, the contact address of the constructor, and the scheduled installation date, it is possible to provide information of necessity at the time of shipping.

Further, the invention is characterized in that the solar cell ordering system further comprises module information obtaining means for obtaining module information including a module output value of a to-be-installed solar cell module based on a module serial number which is a number or a symbol attached for discriminating individual solar cell modules, a module output value showing a production of electricity of an individual solar cell module, and a module serial number of the to-be-installed solar cell module.

According to the invention, since the solar cell ordering system has the module information obtaining means, it is possible, for instance, to obtain module information of the to-be-installed solar cell module from database for storing the module information of the solar cell module.

Further, the invention is characterized in that the module information obtaining means draws up customer information for coordinating the module information and name or address of a customer.

According to the invention, the module information obtaining means draws up the customer information for coordinating the module information and the name or address of a customer. The solar cell ordering system can control an output value of the photovoltaic power system for each customer by, for instance, storing the customer information on the database.

Further, the invention is characterized in that input and output of information are carried out using a network.

According to the invention, since input and output of information are carried out using the network, it is possible to provide planning, estimate, and order placement of the photovoltaic power system at any time.

### Brief Description of Drawings

Other and further objects, features, and advantages of the invention will be more explicit from the following detailed description taken with reference to the drawing wherein:
Fig. 1 is a block diagram of a solar cell ordering system 50 according to one embodiment of the invention;
Fig. 2 is a flow chart for explaining a flow from planning of a photovoltaic power system up to installation completion using the solar cell ordering system 50;
Figs. 3A to 3C are views showing screen pages displayed on a PC of a customer when the customer inputs information regarding a roof;
Fig. 4 is a view showing a roof construction plan 64 drawn up by roof shape creating means 1;
Fig. 5 is a view showing a screen page 65 displayed on the PC of the customer for confirmation of the roof construction plan 64;
Figs. 6A to 6C are a module layout view 33, a wiring diagram 35a, and a marking draft 35b;
Fig. 7 is a view showing a list of members 34;
Fig. 8 is a view showing unit price information database 26;
Fig. 9 is a view showing estimate information 37;
Fig. 10 is a view showing a screen page 66 displayed at the time of inputting information regarding the customer;
Fig. 11 is a view showing a screen page 67 displayed on the PC of the customer in order to confirm order contract information 40;
Fig. 12 is a view showing module information database 27;
Fig. 13 is a view showing customer information 44 drawn up by module information obtaining means 5;
Fig. 14 is a view showing shipping instruction information 42; and
Fig. 15 is a view showing a screen page 68 displayed on the PC of the customer for approval of installation completion confirming information 43.

### Best Mode for Carrying out the Invention

Now referring to the drawings, preferred embodiments of the invention are described below.

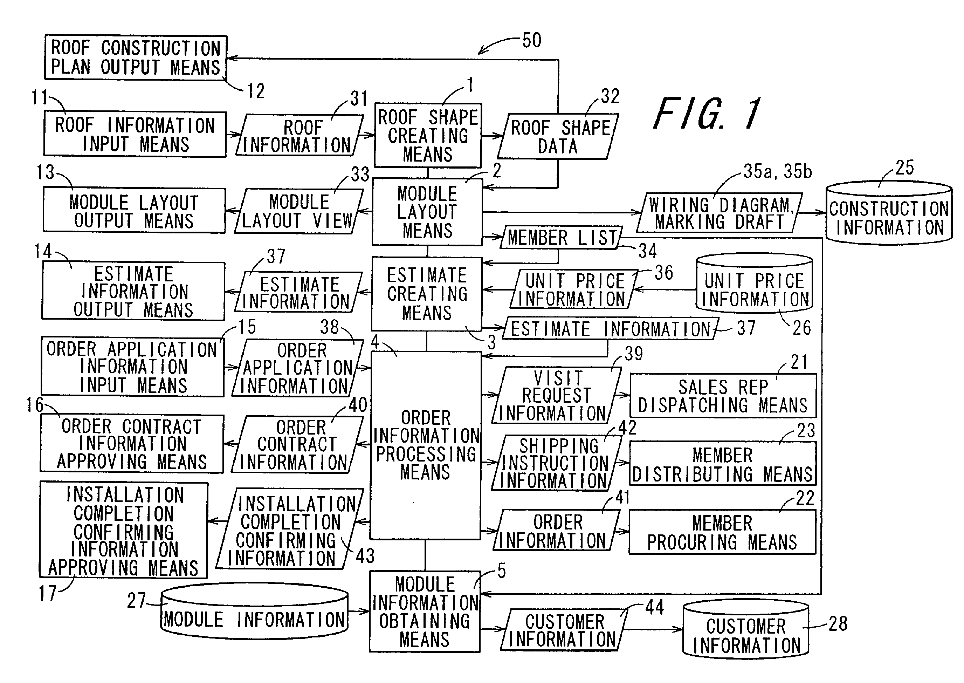

Fig. 1 is a block diagram of a solar cell ordering system 50 according to one embodiment of the invention. The solar cell ordering system 50 is connected to a PC (Personal Computer) which a customer uses through a network. The solar cell ordering system 50 is a system for providing a planning about installation of a photovoltaic power system, an estimate for members of necessity and further, placing an order for the members to a constructor, when necessary information is given from the customer through the network.

The solar cell ordering system 50 comprises roof shape creating means 1, module layout means 2, estimate creating means 3, order information processing means 4, and module information obtaining means 5.

The roof shape creating means 1 creates roof shape data 32 including a roof construction plan based on roof information 31 inputted by the customer. The module layout means 2 designs a layout of a solar cell module using the roof shape data 32 created by the roof shape creating means 1. Further, the module layout means 2 creates a module layout view 33, a list of members 34, a wiring diagram 35a, and a marking draft 35b. The estimate creating means 3 draws up estimate information 37 using the list of members 34 and unit price information 36. The order information processing means 4 draws up, using the estimate information 37 and order application information 38, visit request information 39, order contract information 40, order information 41, shipping instruction information 42, and installation completion confirming information 43. The module information obtaining means 5 obtains module information using the list of members 34. Moreover, the module information obtaining means 5 draws up customer information 44 using the obtained module information.

Further, the solar cell ordering system 50 comprises construction information database 25, unit price information database 26, module information database 27, and customer information database 28.

The construction information database 25 includes the wiring diagram 35a and marking draft 35b drawn up by the module layout means 2. The unit price information database 26 includes unit price information 36. The module information database 27 includes the module information of the solar cell module. The customer information database 28 includes the customer information 44 drawn up by the module information obtaining means 5.

Further, the solar cell ordering system 50 comprises sales rep dispatching means 21, member procuring means 22, and member distributing means 23.

The sales rep dispatching means 21 receives the visit request information 39 from the order information processing means 4, and sends a sales rep an electric mail having the visit request information 39 attached thereto, for instance. The member procuring means 22 receives the order information 41 from the order information processing means 4, and sends a member manufacturer who manufactures the member, an electronic mail with the order information 41 attached thereto. The member distributing means 23 receives the shipping instruction information 42 from the order information processing means 4, and sends a constructor an electronic mail with the shipping instruction information 42 attached thereto.

Further, the solar cell ordering system 50 comprises roof information input means 11, roof construction plan output means 12, module layout output means 13, estimate information output means 14, order application information input means 15, order contract information approving means 16, and installation completion confirming information approving means 17.

The roof information input means 11 displays a screen page which is required for input of information regarding the roof, on the PC of the customer. Moreover, the roof information input means 11 receives information regarding the roof inputted by the customer, and collectively sends the information as roof information 31 to the roof shape creating means 1. The roof construction plan output means 12 receives the roof shape data 32 from the roof shape creating means 1, and displays the roof shape data 32 on the PC of the customer. The module layout output means 13 receives the module layout view 33 from the module layout means 2, and displays the module layout view 33 on the PC of the customer. The estimate information output means 14 receives the estimate information 37 from the estimate creating means 3, and displays the estimate information 37 on the PC of the customer.

The order application information input means 15 displays the screen page which is required for input of the information regarding the customer, on the PC of the customer. The order application information input means 15 receives the information inputted by the customer and then, collectively sends the information as the order application information 38 to the order information processing means 4. The order contract information approving means 16 receives the order contract information 40 from the order information processing means 4, and displays the order contract information 40 on the PC of the customer. The installation completion confirming information approving means 17 receives the installation completion confirming information 43 from the order information processing means 4, and displays the installation completion confirming information 43 on the PC of the customer.

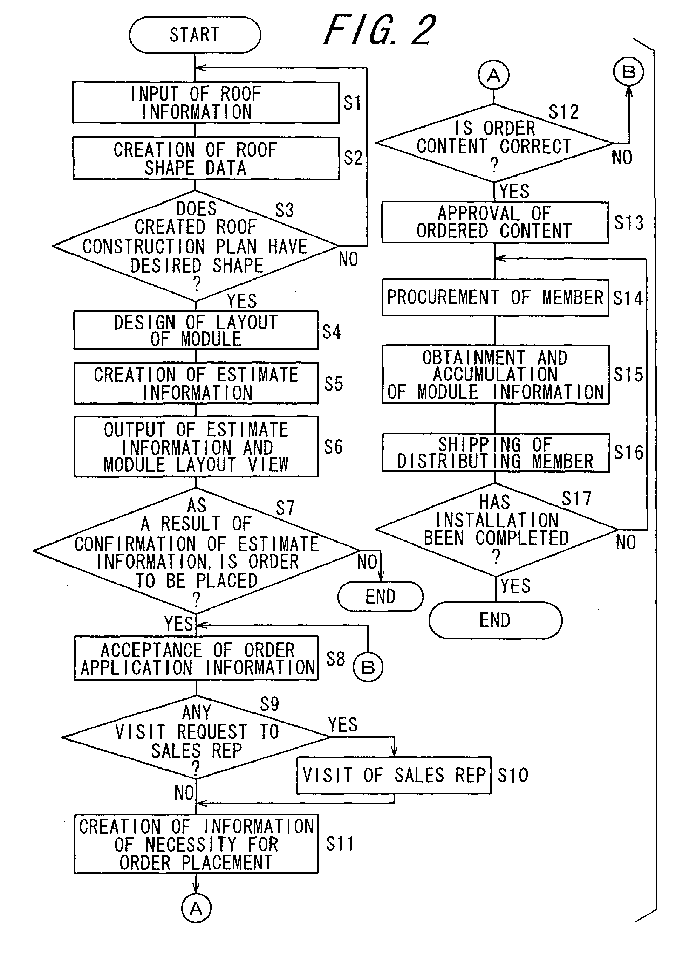

Fig. 2 is a flow chart for explaining a flow from planning of a photovoltaic power system up to installation completion using the solar cell ordering system 50.

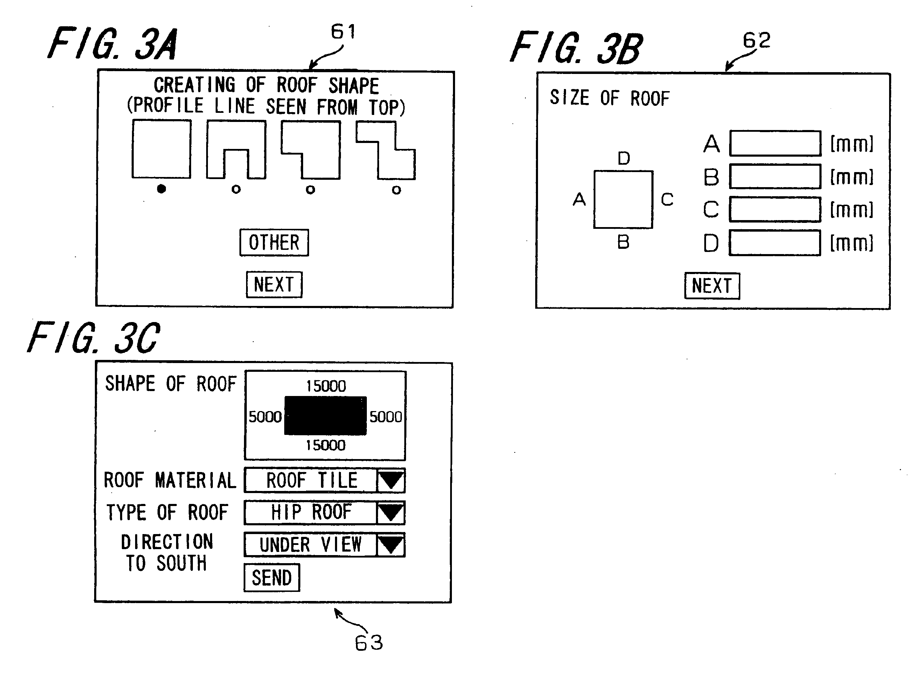

First of all, at step S1, the roof information input means 11 receives the information regarding the roof inputted by the customer. Figs. 3A to 3C are views showing screen pages displayed on the PC of the customer when the customer inputs the information regarding the roof.

Fig. 3A is a view showing a screen page 61 for selecting a shape of the roof. The shape of the roof is depicted by a profile line of the roof when the roof is seen from a top. In a case where there is no shape of roof corresponding to the roof on which the photovoltaic power system is to be installed, the customer will select "OTHER" so as to look for a shape of corresponding roof. When the customer selects a shape of the roof and then selects "NEXT", a screen page shown in Fig. 3B is displayed.

Fig. 3B is a view showing a screen page 62 for inputting a size with respect to each side of the shape of the roof. When the customer inputs a size with respect to each side of the shape of the roof and selects "NEXT", a screen page shown in Fig. 3C is displayed.

Fig. 3C is a view showing a screen page 63 for selecting a roof material, a type of the roof, and a direction to the south. The roof material indicates building materials for forming a roof, such as roof tile, slate, and metal sheet seam roofing. The type of the roof indicates types of roof style such as gable roof, hip roof, and flat roof. The direction to the south indicates a direction to the south with respect to the shape of the roof. When the customer selects these components and then selects "SEND", the information regarding the roof is sent to the roof information input means 11. The roof information input means 11 receives the information regarding the roof and then, collectively sends the information as the roof information 31 to the roof shape creating means 1.

Accordingly, the roof information 31 includes information showing a shape of the roof, which is depicted by a profile line of the roof when the roof is seen from a top, information showing a variety of roof materials, information showing a type of the roof, and information showing a relation between shape and direction of the roof. Detailed roof information 31 enables the module layout means 2 to draw up a more appropriate list of members 34, that is in accordance with the roof, and further enables the estimate creating means 3 to provide a correct estimate.

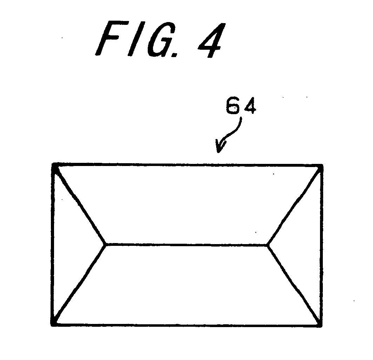

Next, at step S2, the roof shape creating means 1 creates the roof shape data 32 using the received roof information. The roof data 32 includes the roof construction plan. Fig. 4 is a view showing a roof construction plan 64 drawn up by the roof shape creating means 1. The roof construction plan 64 is a view showing a shape of roof and a type of roof included in the roof information 31.

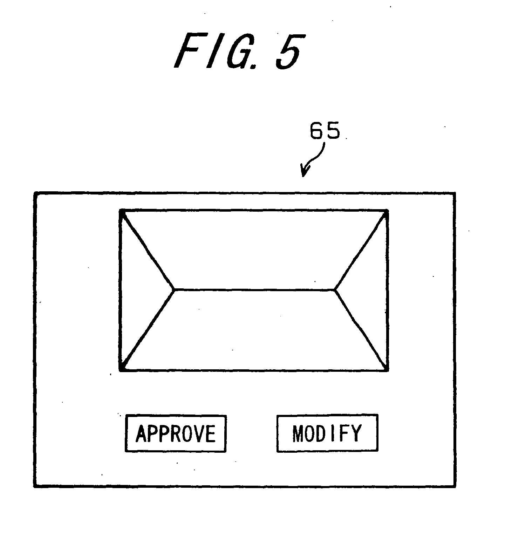

Next, at step S3, the roof shape creating means 1 sends the roof shape data 32 to the roof construction plan output means 12. The roof construction plan output means 12 receives the roof shape data 32, and displays the roof construction plan 64 on the PC of the customer. Fig. 5 is a view showing a screen page 65 displayed on the PC of the customer for confirmation of the roof construction plan 64. The customer confirms the roof construction plan 64 and selects "APPROVE" or "MODIFY". When the customer selects "MODIFIY", the screen page 61 shown in Fig. 3A is displayed. In other words, the operation returns to the step S1. When the customer selects "APPROVE", information having a content that is "APPROVE" is sent to the module layout means 2.

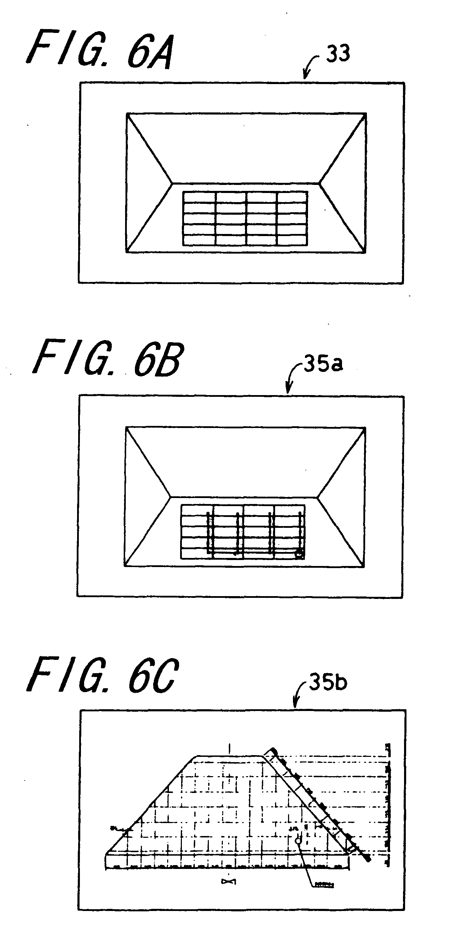

Next, at step S4, the module layout means 2 designs a layout of the solar cell module using the roof shape data 32 created by the roof shape creating means 1. The module layout means 2 draws up the module layout view 33, the wiring diagram 35a, and the marking draft 35b. Fig. 6A is a view showing the module layout view 33. The module layout view 33 is a view showing an arrangement of the solar cell module. Fig. 6B is a view showing the wiring diagram 35a. The wiring diagram 35a is a view in which a power terminal box, a connection path, a position of wiring port are added to the module layout view 33. Fig. 6C is a view showing the marking draft 35b. The marking draft 35b is a view showing a position which is to be a standard for installation of the solar cell module. The marking draft 35b is made necessary when the photovoltaic power system is being installed on the roof.

The module layout means 2 adds the wiring diagram 35a and the marking draft 35b as construction information to the construction information database 25. The wiring diagram 35a and the marking draft 35b are sent to the constructor at a shipping stage.

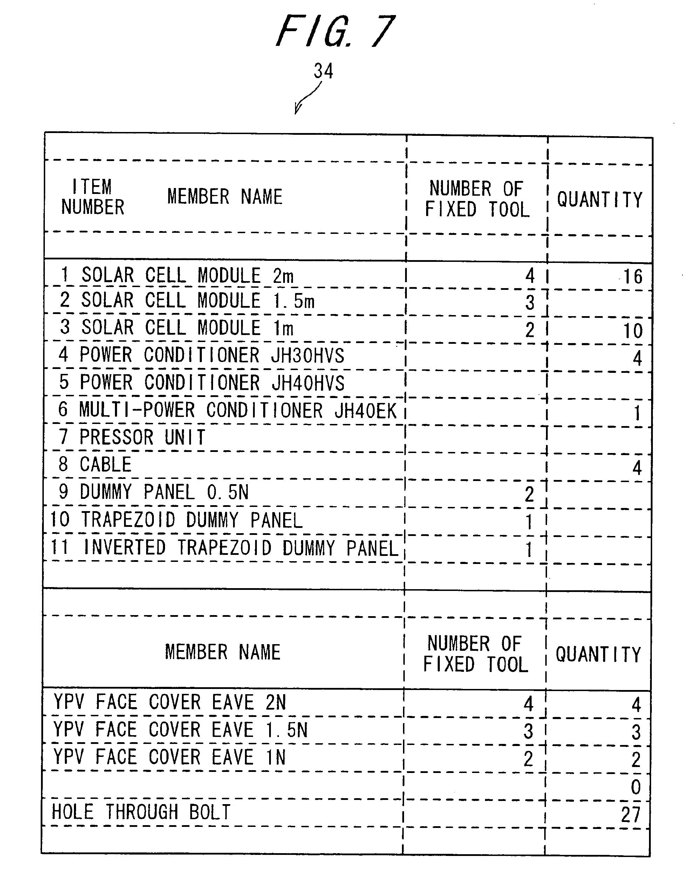

Further, the module layout means 2 draws up the list of members 34 according to the layout of the solar cell module. Fig. 7 is a view showing the list of members 34. The list of members 34 indicates name and quantity of each member of necessity for the photovoltaic power system.

Next, at step S5, the estimate creating means 3 draws up the estimate information 37, using the list of members 34 drawn up by the module layout means 2, and the unit price information 36 of the unit price information database 26.

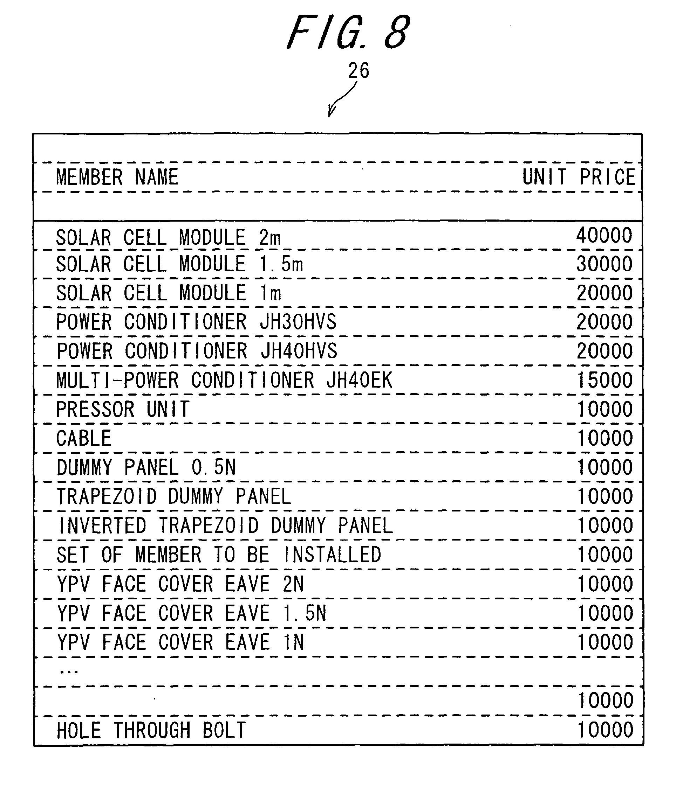

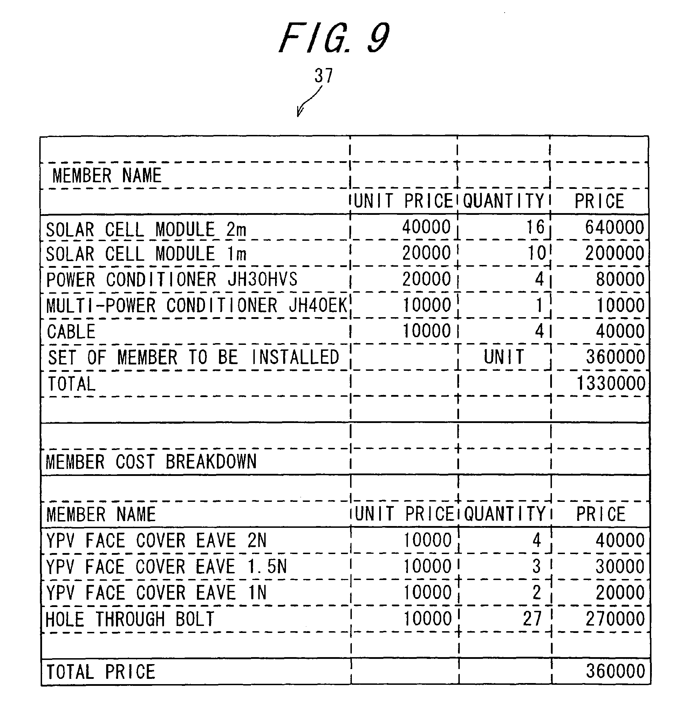

Fig. 8 is a view showing the unit price information database 26. The unit price information database 26 includes the unit price information 36. The unit price information 36 indicates name and unit price of each member. Fig. 9 is a view showing the estimate information 37. The estimate information 37 indicates a name of each member, a quantity of each member, a total price of each member, and a total price of all the members.

Next, at step S6, the module layout means 2 sends the module layout view 33 to the module layout output means 13. The module layout output means 13 receives the module layout view 33, and displays the module layout view 33 on the PC of the customer. The estimate creating means 3 sends the estimate information 37 to the estimate information output means 14. The estimate information output means 14 receives the estimate information 37, and displays the estimate information 37 on the PC of the customer.

Next, at step S7, the customer confirms the module layout view 33 and the estimate information 37, and selects "APPROVE" or "CANCEL". When the customer selects "CANCEL", the operation ends. When the customer selects "APPROVE", the operation proceeds to a step S8.

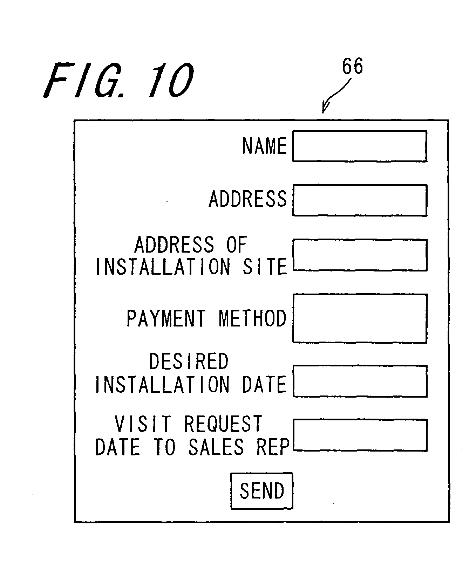

At step S8, the order application information input means 15 displays a screen page which is required for input of the information regarding the customer, on the PC of the customer. Fig. 10 is a view showing a screen page 66 displayed at the time of inputting information regarding the customer. The customer inputs a name of the customer, an address of the customer, an address of an installation site, a payment method, a desired installation date, and a visit request data to a sales rep. When the customer inputs these components and selects "SEND", the information regarding the customer is sent to the order application information input means 15. The order application information input means 15 receives the information regarding the customer and then, collectively sends the information regarding the customer as the order application information 38 to the order information processing means 4.

Next, at step S9, the order information processing means 4 determines whether the visit request date to the sales rep is specified in the order application information 38 or not. In a case where the visit request data is not specified, the operation proceeds to a step S11. In a case where the visit request date is specified, the operation proceeds to a step S10. At step S10, the order information processing means 4 draws up the visit request information 39. The order information processing means 4 sends the visit request information 39 to the sales rep dispatching means 21. The sales rep dispatching means 21 receives the visit request information 39, and sends an electronic mail with the visit request information 39 attached thereto. The sales rep receives the electronic mail, and visits the customer in compliance with the visit request information 39. Subsequently, the operation proceeds to the step S11.

At step S11, the order information processing means 4 draws up the order contract information 40, the order information 41, the shipping instruction information 42, and the installation completion confirming information 43 using the estimate information 37 and the order application information 38.

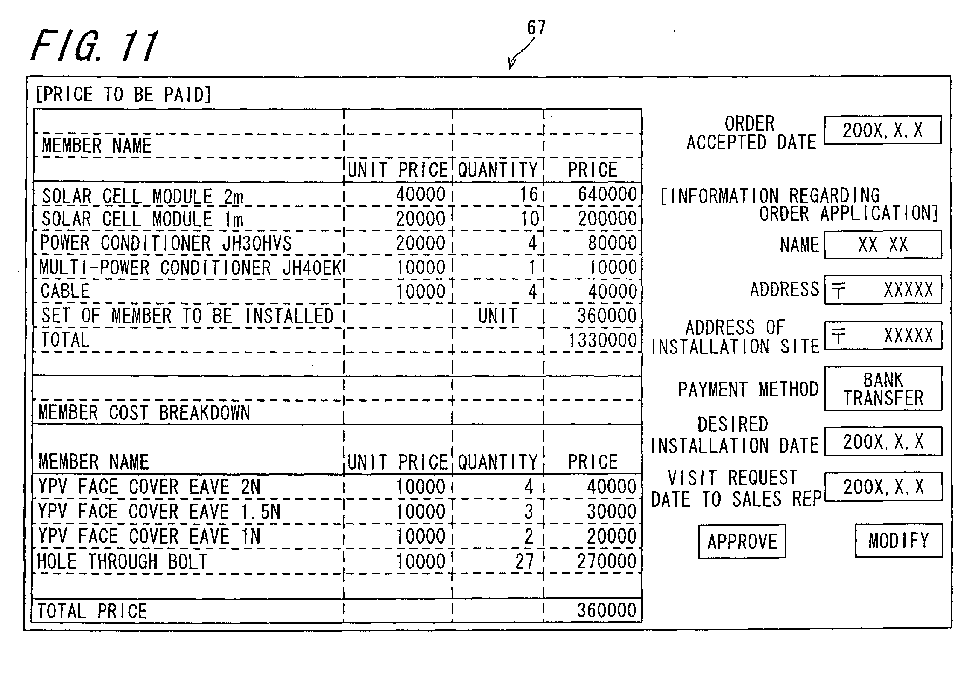

Next, at step S12, the order information processing means 4 sends the order contract information 40 to the order contract information approving means 16. The order contract information approving means 16 receives the order contract information 40, and displays the order contract information 40 on the PC of the customer. Fig. 11 is a view showing a screen page 67 displayed on the PC of the customer in order to confirm the order contract information 40. The order contract information 40 includes the estimate information 37 and the order application information 38. Furthermore, the order contract information 40 shows an order accepted date. The customer confirms the order contract information 40, and determines whether it is correct or not. When the customer determines that the order contract information 40 is not correct, and selects "MODIFY", a screen page 66 shown in Fig. 10 is displayed. In other words, the operation returns to the step S8. When the customer determines that a content of the order contract information 40 is correct, the operation proceeds to a step S13.

When the customer selects "APPROVE" at step S13, information having a content that is "APPROVE" is sent to the order information processing means 4.

Next, at step S14, the order information processing means 4 sends the order information 41 to the member procuring means 22. The member procuring means 22 receives the order information 41, and sends a member manufacturer who manufactures the member, an electronic mail with the order information 41 attached thereto. The member manufacturer receives the electronic mail and then, provides an agency dealing in the photovoltaic power system with the member in compliance with the order information 41.

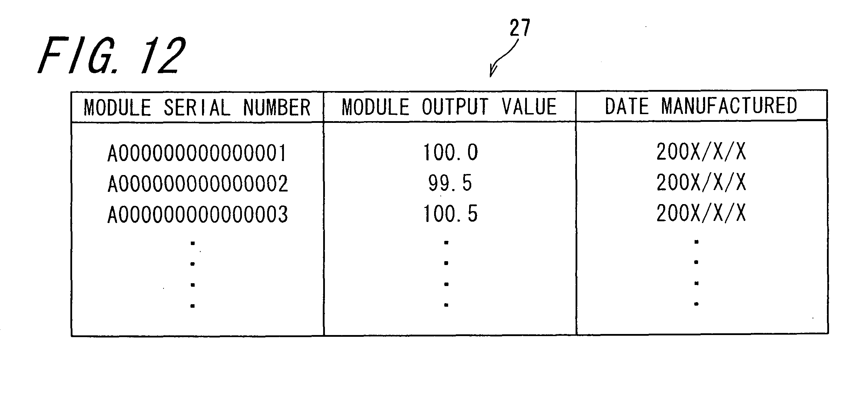

Next, at step S15, the module information obtaining means 5 obtains the module information of the procured solar cell module using the list of members 34. To the list of members 34, at a stage of member procurement, a module serial number of each solar cell module is added. The module serial number is a number or a symbol provided on each individual solar cell module in order to discriminate the individual solar cell module. The module information obtaining means 5 obtains, using the module serial number, the module information from the module information database 27. Fig. 12 is a view showing the module information database 27. The module information database 27 includes the module information. The module information includes the module serial number of each solar cell module, a module output value showing a production of electricity of each solar cell module, and a manufactured date of each solar cell module.

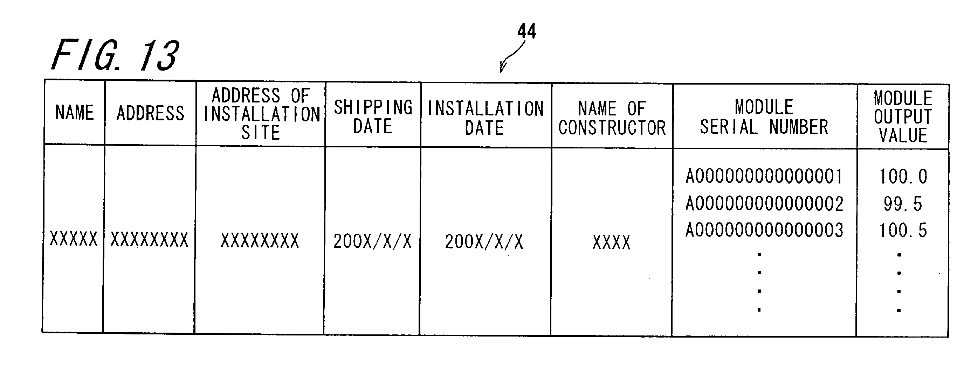

The module information obtaining means 5 draws up the customer information 44 using the obtained module information. Fig. 13 is a view showing the customer information 44 drawn up by the module information obtaining means 5. The customer information 44 includes a name of the customer, an address of the customer, an address of an installation site, a shipping date, an installation date, a name of a constructor, the module serial number, and the module output value. The customer information 44 may include further a manufactured date of the solar cell module.

The module information obtaining means 5 adds the drawn-up customer information 44 to the customer information database 28. When the customer information 44 has been registered in the customer information database 28, it is possible to control the output value of the photovoltaic power system for each customer.

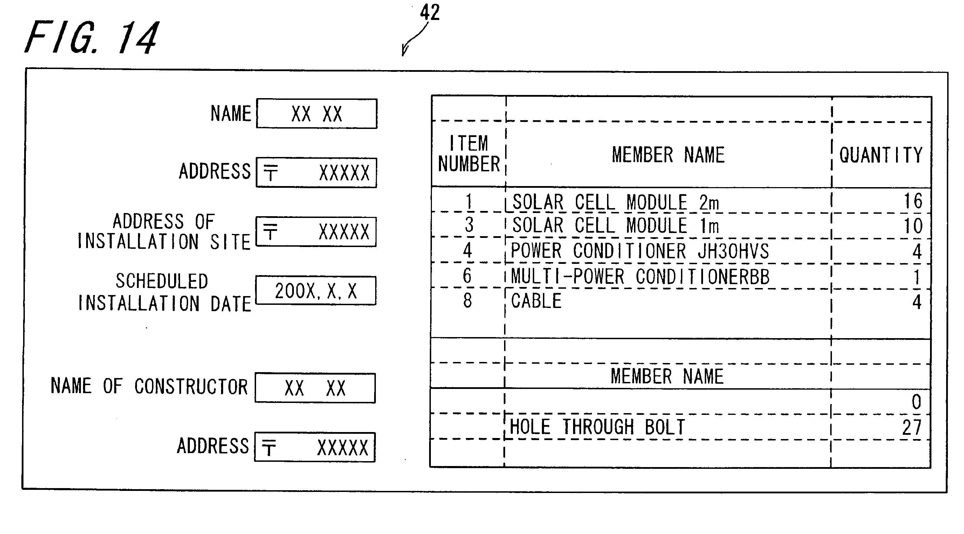

Next, at step S16, the order information processing means 4 sends the shipping instruction information 42 to the member distributing means 23. Fig. 14 is a view showing the shipping instruction information 42. The shipping instruction information 42 includes a name of the customer, an address of the customer, an address of an installation site, a scheduled installation date, a name of a constructor, an address of the constructor, a name of each member, and a quantity of each member. The member distributing means 23 receives the shipping instruction information 42, and sends the constructor an electronic mail with the shipping instruction information 42 attached thereto. The constructor receives the electronic mail and then, goes for the member to the agency dealing in the photovoltaic power system. Subsequently, the constructor carries the member to the installation site, and installs the photovoltaic power system.

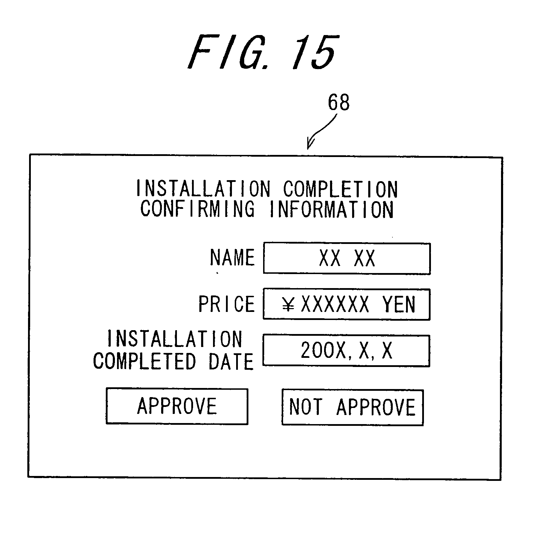

Next, at step S17, the order information processing means 4 sends the installation completion confirming information 43 to the installation completion confirming information approving means 17. The installation completion confirming information approving means 17 receives the installation completion confirming information 43, and displays the installation completion confirming information 43 on the PC of the customer. Fig. 15 is a view showing a screen page 68 displayed on the PC of the customer for approval of the installation completion confirming information 43. The customer selects "APPROVE" or "NOT APPROVE". When the customer selects "NOT APPROVE", the operation returns to the step S14. When the customer selects "APPROVE", the operation ends.

As above, it is possible to provide planning through installation of the photovoltaic power system, using the solar cell ordering system 50.

In the embodiment, the sales rep dispatching means 21 informs the sales rep of the visit request information 39 by sending an electronic mail, but the other informing methods may be applicable. This is the case also with the member procuring means 22 and the member distributing means 23.

In the embodiment, since the solar cell ordering system 50 provides the planning, estimate, and order placement of the photovoltaic power system based on the input of the customer, it is possible to largely save troubles compared to a conventional sales system.

Further, in the invention, information for the customer is displayed and information from the customer is inputted, for instance, on the PC of the customer, which is connected to the solar cell ordering system 50 through a network and therefore, it is possible to provide the planning, estimate, and order placement of the photovoltaic power system at any time. In the conventional sales system, limitation is generated in terms of time depending on schedules of the customer and sales rep. However, the solar cell ordering system 50 is not subject to such limitation. Accordingly, it is possible to shorten a length of time which takes until the installation of the photovoltaic power system.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

### Industrial Applicability

As above, according to the invention, the solar cell ordering system can design the layout of the solar cell module appropriately according to the roof based on the inputted roof information, and draw up the estimate in according with the layout. Further, the solar cell ordering system can place an order for the members of necessity for the photovoltaic power system. Since it is thus possible to design the layout of the solar cell module appropriately according to the roof and to place an order for the members of necessity for the photovoltaic power system, it is possible to save the troubles on the planning, estimate, and order placement, and simultaneously shorten a length of the time for the troubles.

Further, according to the invention, the module layout means can draw up a more appropriate list of members according to the roof, and the estimate creating means can draw up a more correct estimate.

Further, according to the invention, the estimate creating means can easily draw up the estimate information. Accordingly, it is possible to shorten a length of time for the estimate.

Further, according to the invention, the estimate creating means can easily obtain the unit price of each member which is required for drawing up the estimate information. Accordingly, it is possible to shorten a length of time for the estimate.

Further, according to the invention, since the estimate information can provide the sufficient information as the estimate, it is possible to utilize the estimate information as information for making a decision at the time of purchasing the photovoltaic power system.

Further, according to the invention, the order information processing means can obtain the information regarding the customer, which is necessary for application of the order placement, and carry out the information processing which is required from the application of the order placement up to the confirmation of the completion of the installation.

Further, according to the invention, since the order information processing means carries out the information processing form the application of the order placement up to the confirmation of the completion of the installation, it is possible to save the troubles of the planning, estimate, and order placement.

Further, according to the invention, it is possible to provide the information which is required when the customer approves the order contract.

Further, according to the invention, it is possible to provide the information which is required at the time of shipping.

Further, according to the invention, it is possible to obtain the module information of the to-be-attached solar cell module, for instance, from the database for storing the module information of the solar cell module.

Further, according to the invention, the module information obtaining means draws up the customer information for coordinating the module information and name or address of the customer. The solar cell ordering system can control the output value of the photovoltaic power system for each customer by, for instance, storing the customer information on the database.

Further, according to the invention, it is possible to provide the planning, estimate, order placement of the photovoltaic power system at any time. Accordingly, it is possible to shorten a length of time which takes until the installation of the photovoltaic power system.

## Claims

1. A solar cell ordering system for planning a photovoltaic power system, making a cost estimate thereof, and placing an order thereof, the solar cell ordering system comprising:
roof shape creating means for creating roof shape data based on inputted roof information;
module layout means for designing a layout of a solar cell module using the roof shape data, and drawing up a list of members of necessity for the photovoltaic power system;
estimate creating means for drawing up estimate information using the list of members and unit price information showing a unit price of each member; and
order information processing means for placing an order for the members using the estimate information and order application information including information regarding a customer, which is necessary for application of the order placement.

2. The solar cell ordering system of claim 1, wherein the roof information includes information showing a shape of a roof, which is depicted by a profile line of the roof when the roof is seen from a top, and includes at least one piece of information among information showing a variety of roof materials, information showing a type of the roof, and information showing a relation between shape and direction of the roof.

3. The solar cell ordering system of claim 1, wherein the list of members includes at least name and quantity of each of the members.

4. The solar cell ordering system of claim 1, wherein the unit price information includes at least name and a unit price of each of the members.

5. The solar cell ordering system of claim 1, wherein the estimate information includes at least a name of each of the members, a quantity of each of the members, a unit price of each of the members, and a total price of all the members.

6. The solar cell ordering system of claim 1, wherein the order application information includes at least one of a name of a customer, an address of the customer, an address of an installation site, a payment method, and a desired installation date.

7. The solar cell ordering system of claim 1, wherein the order information processing means draws up order contract information to be sent to a customer, order information for giving an instruction of procurement of the members, shipping instruction information for giving an instruction of shipping of the procured members, and installation completion confirming information having a content written thereon that the photovoltaic power system has completely installed.

8. The solar cell ordering system of claim 7, wherein the order contract information includes at least a name of a customer, an address of the customer, an order accepted date, and an installation date.

9. The solar cell order system of claim 7, wherein the shipping instruction information includes at least a name of a customer, an address of the customer, an address of an installation site, a name of each of the members, a quantity of each of the members, a name of a constructor, a contact address of the constructor, and a scheduled installation date.

10. The solar cell order system of claim 1, further comprising module information obtaining means for obtaining module information including a module output value of a to-be-installed solar cell module based on a module serial number which is a number or a symbol attached for discriminating individual solar cell modules, a module output value showing a production of electricity of an individual solar cell module, and a module serial number of the to-be-installed solar cell module.

11. The solar cell order system of claim 10, wherein the module information obtaining means draws up customer information for coordinating the module information and name or address of a customer.

12. The solar cell order system of claim 1, wherein input and output of information are carried out using a network.
